# EUROPEAN PATENT SPECIFICATION

(11) **EP 3 331 119 B1**
(45) Date of publication and mention of the grant of the patent: **16.02.2022**
(21) Application number: 16830500.1
(22) Date of filing: 26.07.2016
(51) Int. Cl.: H02J 3/38, H02J 13/00, H04Q 9/00, G05B 19/042

(54) **MANAGEMENT SERVER AND MANAGEMENT METHOD**
VERWALTUNGSSERVER UND VERWALTUNGSVERFAHREN
SERVEUR ET PROCÉDÉ DE GESTION

(30) Priority: 29.07.2015 JP 2015149999
(43) Date of publication of application: 06.06.2018
(73) Proprietor: Kyocera Corporation, Kyoto-shi, Kyoto 612-8501 (JP)
(72) Inventor: OKINO, Kenta, Kyoto-shi Kyoto 612-8501 (JP); YOSHITANI, Naohisa, Kyoto-shi Kyoto 612-8501 (JP); OZAWA, Taisuke, Kyoto-shi Kyoto 612-8501 (JP)
(74) Representative: TBK
(86) International application number: PCT/JP2016/071786
(87) International publication number: WO 2017/018395

(56) References cited:
- EP-A1- 2 874 265
- WO-A1-2014/132371
- WO-A1-2016/017426
- JP-A- 2013 134 665
- JP-A- 2013 198 177
- JP-A- 2014 150 627
- JP-A- 2014 158 375
- JP-A- 2014 527 247
- JP-A- 2015 115 643
- US-A1- 2014 032 009

## Description

### TECHNICAL FIELD

The present invention relates to a management server and a management method that transmit a power control message for requesting control for a distributed power source installed in a facility, and a power instruction message for requesting control for a forward power flow amount from a power grid to a facility or a reverse power flow amount from the facility to the power grid.

### BACKGROUND ART

There has been known a power instruction message including the power instruction message for requesting suppression of a forward power flow amount (power source amount) from the power grid to the facility (for example, demand response (DR)) or the power instruction message requesting suppression of the reverse power flow amount from the facility to the power grid. The power instruction message is transmitted to the facility, through communication lines, from a management server belonging to a power company, a power distribution company, or the like (for example, Patent Literature 1).

### CITATION LIST

### PATENT LITERATURE

Patent Literature 1: JP 2012-244665 A

Document US 2014/032009 A1 discloses a power distribution system and a method for operation thereof, wherein a control device that is associated with a power output device is connected via a unidirectional or bidirectional communication link to a central device that monitors a power distribution system. Regular or irregular checks on whether the communication link is interrupted or the transmission quality of the communication link is below a prescribed minimum quality value are performed. The supply of power from the at least one power output device to the power distribution system is reduced or stopped by the control device if the communication link is interrupted or the transmission quality of the communication link is below the prescribed minimum quality value.

Document EP 2 874 265 A2 discloses a method for monitoring and controlling a power distribution with decentralized energy supply in an energy distribution network, wherein quality of the communication is monitored.

### SUMMARY OF INVENTION

It is an object of the present invention to improve the reliability of a remote control of a distributed power source.

This object is solved by a management server as set out in claim 1 or 14, and further alternatively by a management method as set out in claim 17 or 18.

Advantageous developments are defined in the dependent claims.

### BRIEF DESCRIPTION OF DRAWINGS

Fig. 1 is a diagram illustrating a power management system 1 according to an embodiment.
Fig. 2 is a diagram illustrating a lower management server 300 according to an embodiment.
Fig. 3 is a diagram illustrating reliability information according to an embodiment.
Fig. 4 is a diagram illustrating reliability information according to an embodiment.
Fig. 5 is a diagram illustrating a management method according to an embodiment.
Fig. 6 is a diagram illustrating a management method according to another embodiment 1.
Fig. 7 is a diagram illustrating a management method according to another embodiment 1.
Fig. 8 is a diagram illustrating a management method according to another embodiment 2.

### DESCRIPTION OF EMBODIMENTS

Hereinafter, the embodiment will be described with reference to the drawings. Note that the same or similar reference signs are applied to the same or similar portions in the following descriptions of the drawings.

It must be understood that the drawings are schematic, and the ratio of each dimension and the like may differ from the real one. Accordingly, specific dimensions and the like should be understood with reference to the following description. Furthermore, it must be understood that, the relationship or ratio of dimensions included in each of the drawings may differ.

### [Overview of Embodiment]

In the background art, since whether the forward power flow amount or the reverse power flow amount is appropriately suppressed in response to the power instruction message is dependent on factors, such as a factor of whether the power instruction message is actually received by the facility and a factor of whether power consumption of an equipment or generated power of a power generation apparatus actually decreases in response to the power instruction message, there is assumed a case where it is hard to appropriately suppress the forward power flow amount or the reverse power flow amount by transmission of the power instruction message.

The management server according to Overview of Embodiment includes a transmitter configured to transmit a power instruction message including a power control message requesting control for a distributed power source installed in a facility, a forward power flow control message requesting control for a forward power flow amount from a power grid to the facility or a reverse power flow control message requesting control for a reverse power flow amount from the facility to the power grid, through a communication line.

First, the management server includes a manager configured to manage reliability information related to reliability that the facility responds to the power instruction message and the transmitter transmits the power instruction message to the facility based on the reliability information. According to the above configuration, the power instruction message is transmitted based on the reliability information, and therefore, it is possible to appropriately control the forward power flow amount or the reverse power flow amount by transmission of the power instruction message.

Second, the management server includes a controller configured to estimate an expected control amount that is the forward power flow amount or the reverse power flow amount which decreases in response to the power instruction message, based on at least one of real-time information indicating a current quality of the communication line and schedule information indicating a schedule as to whether responding to a power instruction message is possible. According to the above configuration, the expected control amount is reflected base on at least one of the real-time information and the schedule information, and therefore, it is possible to appropriately control the forward power flow amount or the reverse power flow amount by transmission of the power instruction message.

### [Embodiments]

### (Power Management System)

Hereinafter, a power management system according to an embodiment will be described.

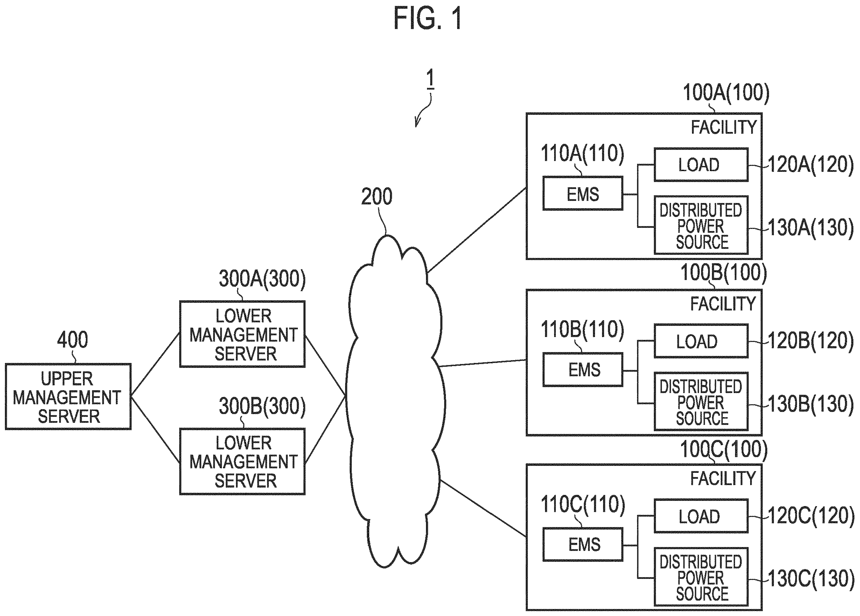

As illustrated in Fig. 1, a power management system 1 includes a consumer's facility 100 (hereinafter, simply referred to as facility 100), a network 200, a lower management server 300, and an upper management server 400.

The facility 100 includes an EMS 110, a load 120, and a distributed power source 130. The EMS 110 is an energy management system of an equipment mounted in the facility 100. The load 120 is an equipment configured to consume power. The load 120 includes equipments, for example, refrigerators, lightings, air conditioners, televisions, and the like. The load 120 may include one equipment or may include a plurality of equipments. The distributed power source 130 is an equipment configured to generate power or store power. The distributed power source 130 includes equipments, for example, a solar cell battery, a fuel cell battery, a storage battery, and the like. The distributed power source 130 may include one equipment or may include a plurality of equipments. When the distributed power source 130 includes a plurality of equipments, the distributed power source 130 may include two or more of a solar cell battery, a fuel cell battery, and a storage battery. Specifically, the distributed power source 130 may include a solar cell battery and a fuel cell battery or include a fuel cell battery and a storage battery.

According to embodiments, a facility 100A, a facility 100B, and a facility 100C are illustrated as examples of the facility 100. The facility 100A, the facility 100B, and the facility 100C have the same configuration.

The network 200 is a communication line configured to connect the facility 100 and the lower management server 300. The network 200 is, for example, Internet. The network 200 is supplied by a provider which each facility 100 has a contract with. The provider is a company which supplies services for connection to the network (for example, Internet).

The lower management server 300 is a server belonging to an aggregator such as a power distribution company. The aggregator is a company which manages a forward power flow amount or a reverse power flow amount of the facility 100 that has a contract with the aggregator.

In this embodiment, the lower management server 300A and the lower management server 300B are illustrated as examples of the lower management server 300. The lower management server 300A and the lower management server 300B have the same configuration. Alternatively, the upper management server 400 and the lower management server 300 may be integrated with each other.

The upper management server 400 is a server belonging to an electric power provider, such as an electric power company. The electric power provider may entrust management for the forward power flow amount or the reverse power flow amount of the facility 100 to the aggregator.

In this embodiment, the upper management server 400 transmits a forward flow control message (for example, demand response (DR)) for requesting increase or decrease in a forward power flow amount (power source amount) supplied from a power grid to the facility 100. The upper management server 400 transmits a reverse power flow control message for requesting increase or decrease in a reverse power flow amount supplied from the facility 100 to the power grid. The upper management server 400 may transmit a power control message for controlling operation of the distributed power source 130. The power control message is an instruction for controlling the operation of the distributed power source 130 of the facility 100 as a virtual power plant, and examples of the instruction may include charging, discharging, generation, reverse flow or automatic operation. In this embodiment, the power control message, a forward power flow control message, and a reverse power flow control message are collectively referred to as a power instruction message.

The forward power flow control message includes information indicating a control degree (the suppression degree) of a power mount (a forward power flow amount) supplied from the power grid to the facility 100. The suppression degree may be represented by an absolute value of the power amount (for example, xx kW). Alternatively, the suppression degree may be represented by a relative value of the power amount (for example, decrease by xx kW). Alternatively, the suppression degree may be represented by a suppression ratio of the power amount (for example, xx%).

Alternatively, the forward power flow control message may include information indicating a power purchase price that is a consideration for the power flown from the power grid. By setting a high price as the power purchase price, the power amount of power supplied to the facility 100 from the power grid is expected to be suppressed.

The reverse power flow control message includes information indicating a control degree (suppression degree) of a power mount (a reverse power flow amount) output from the facility 100 to the power grid. Specifically, the reverse power flow control message includes information indicating the suppression degree of a distributed power source. The suppression degree may be represented by an absolute value of an output of the distributed power source (for example, xx kW). Alternatively, the suppression degree may be represented by a relative value of an output of the distributed power source (for example, decrease by xx kW). Alternatively, the suppression degree may be represented by a suppression ratio of an output of the distributed power source (for example, xx %). The suppression ratio may be a ratio to an output certified, when a distributed power source is installed in the consumer's facility 100, as the output capability of a PCS that controls the distributed power source (hereinafter, equipment certified output). If the output capability of the distributed power source is different from that of the PCS, as the equipment certified output, a smaller output capability is selected out of the output capabilities. In a case where a plurality of PCSs are installed, the equipment certified output is a sum of the output capabilities of the plurality of PCSs.

The power source control message may include instructions for a type of the distributed power source 130, AC higher limit settings for charging or discharging, AC lower limit settings for charging or discharging, charging amount, charging time, AC effective capacitance, discharging amount, discharging time, generated power amount, power generation time, reverse power flow amount, reverse power flow time or automatic operation time, or the like, in addition to instructions for charging, discharging, power generation, reverse power flow or automatic operation, or the like as described above.

Here, as a format of the power control message, the forward power flow control message and the reverse power flow control message, it may be possible to use a private format or a format that complies with an automated demand response (ADR). Communication between the upper management server 400 and the lower management server 300 and communication between the lower management server 300 and the facility 100 may be performed according to a scheme that complies with an Open ADR standard. As the Open ADR standard, it is possible to use an arbitrary version of the Open ADR standard, for example, Open ADR2.0.

### (Management Server)

The management server according to an embodiment will be described below. In this case, the lower management server 300 is illustrated as an example of the management server. The management server may be the upper management server 400.

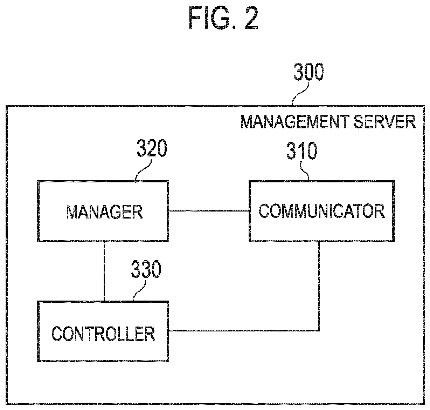

As illustrated in Fig. 2, the lower management server 300 includes a communicator 310, a manager 320, and a controller 330.

The communicator 310 is configured by a communication module and the like, and performs communication with the facility 100 and the upper management server 400. For example, the communicator 310 receives, from the upper management server 400, a power instruction message including a power control message, a forward power flow control message, or a reverse power flow control message. The communicator 310 transmits, to the facility 100, a power instruction message including a power source control message, a forward power flow control message, or a reverse power flow control message, through the network 200 (a communication line). In order to entrust management for the forward power flow amount or reverse power flow amount of the facility 100 to the aggregator (lower management server 300), the content of the power instruction message transmitted to the facility 100 may be different from the content of the power instruction message transmitted from the upper management server 400.

In this embodiment, as described below, based on reliability information related to reliability that the facility 100 responds to the power instruction message, the content of a transmitted party (the facility 100) of the power instruction message and the power instruction message (the content of control, the control amount of the flow or the control amount of the reverse flow). Accordingly, the communicator 310 transmits the power instruction message to the facility 100 based on the reliability information.

The manager 320 is configured by storages such as hard disk drive, and manages reliability information related to reliability that the facility 100 respond to the power instruction message.

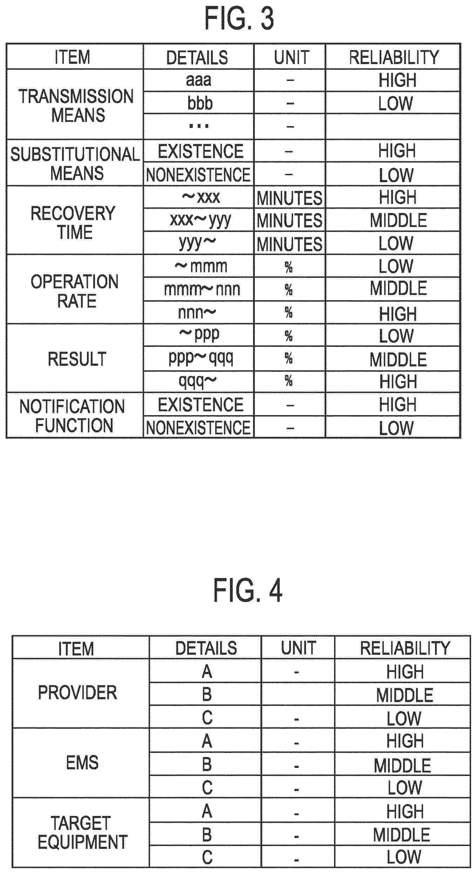

For example, the manager 320 manages the reliability information corresponding to at least one item from among the items illustrated in Figs. 3 and 4. In a case where the reliability information for two or more items is managed, the manager 320 may calculate and manage one reliability corresponding to the facility 100 by assignment of weights to reliabilities for two or more items corresponding to the facility 100 or the like.

As illustrated in Fig. 3, the reliability information includes reliability corresponding to at least one of items, such as a transmission means, a substitutional means, a recovery time, an operation rate, a result, and a notification function. The reliability information may include a plurality of items and the lower management server 300 may determine a reliability based on the plurality of items.

"Transmission means" is an item indicating which of communication lines the lower management server 300 and the facility 100 use. Specifically, it is possible to determine, for example, wired communication or radio communication, as the transmission means. Since there are differences in possibility that a power instruction message is received by the facility 100 depending on the transmission means, reliability is changed. Also, it may be possible to change a reliability by methods of wired communication or radio communication. For example, it may be possible to change a reliability by CDMA, LTE, Wi-Fi (registered trademark), 920 MHz radio or the like as the radio communication. In the case of calculating reliabilities for those radio communications (the case of assigning weights), it is possible to consider position information or a signal strength of at least one of the lower management server 300 and the facility 100. Also, as the transmission means, both of the wired communication and the radio communication may be mixed.

"Substitutional means (substitutional method)" is an item indicating whether there is means for transmitting a power instruction message to the facility 100 or a user of the facility 100 or not even when a quality of a communication line is below a threshold value. Since existence of the substitutional means increases possibility that the power instruction message is received by the facility 100, the reliability is high. On the other hand, since nonexistence of the substitutional means decreases possibility that the power instruction message is received by the facility 100, the reliability is low.

As the substitutional means, any means, such as a fixed telephone, a portable telephone, a leased line, a mail or a letter, are possible as long as the means transmits the power instruction message. It may be possible to assign different reliability depending on which means is used as the substitutional means. For example, a higher reliability is assigned to the case of having means capable of directly contacting a user of the facility, such as a fixed telephone or a portable phone, compared to the case of having only means, such as a mail or a letter. Also, it may be possible to assign high or low reliability to one of the fixed telephone, the portable telephone, the leased line, the mail and the letter according to suitable situations. Also, in the case of having a plurality of means, it is possible to set reliability to be high.

Recovery time is a time from when the quality of the communication line becomes below a threshold value to when the quality of the communication line becomes above the threshold value. Since a shorter recovery time decreases possibility that the power instruction message is not received by the facility 100, the reliability is high. Since a longer recovery time increases possibility that the power instruction message is not received by the facility 100, the reliability is low. The reliability corresponding to the recovery time may have two or more steps.

Here, the recovery time may be determined dynamically based on results of past recovery times. For example, it is possible to determine the recovery time by mathematical methods such as average, standard deviations, or square means, based on the results of past recovery times. Alternatively, the recovery time may be determined statically according to information of the provider that provides communication lines. The information of the provider may include information such as a provider name, supplementary services, faithful security or reliability of services. Alternatively, the recovery time may be statically determined according to the type of the EMS 110 owned by the facility 100.

"Operation rate" is determined based on the percentage in which communication lines are in an available state. That is, the operation rate is calculated based on the non-operation ratio in which communication lines are in a non-available state. The non-operation ratio is the percentage in which communication lines are in an available state due to maintenance, malfunction or the like. As the operation rate is higher, the reliability is higher.

"Result" may be determined based on the percentage of results where a power instruction message including a power control message and a forward power flow control message or a reverse power flow control message is correctly received by the facility 100. Whether the power instruction message is correctly received may be determined based on whether the forward power flow amount or the reverse power flow amount is actually controlled in response to the power instruction message.

Also, the result may include an item indicating whether the forward power flow amount or the reverse power flow amount is actually controlled in response to the power instruction message. The results may be represented by the percentage (%) of a control amount for a forward power flow or a reverse power flow which has been actually controlled by the facility 100, with respect to a control amount for a forward power flow or a reverse power flow requested by the power instruction message. Since it is estimated that possibility that the forward power flow amount or the reverse power flow amount is controlled in response to the power instruction is lower as the result is worse, the reliability is low. On the other hand, since it is estimated that possibility that the forward power flow amount or the reverse power flow amount is controlled in response to the power instruction is higher as the result is better, the reliability is high. The reliability corresponding to the result may have two or more steps.

Also, the result may be two types of 0% and 100%. That is, the result may be information indicating whether the facility 100 controls the forward power flow amount or a reverse power flow amount according to the control amount for the forward power flow or the reverse power flow requested by the power instruction message.

"Notification function" is an item indicating whether the facility 100 has a function for notifying the lower management server 300 of a schedule in which a quality of the communication line is below the threshold value. Since existence of the notification function allows determination of whether the power instruction message is received by the facility 100, the reliability is high. On the other hand, since nonexistence of the substitutional means does not allow determination of whether the power instruction message is received by the facility 100, the reliability is low. The notification function may be a function using "a no-participation schedule" defined in the Open ADR standard. The no-participation schedule is a message indicating that the facility 100 is not capable of responding to the power instruction message.

As illustrated in Fig. 4, reliability information includes reliabilities corresponding to items, such as a provider, an EMS, and a target equipment.

"Provider" is a type of a provider that provides the communication line, for example. Since the reliability of the communication line varies depending on a scale of the provider, equipment environment, or service quality, possibility that the power instruction message is received by the facility 100 varies depending on the provider.

"EMS" is a type of an EMS 110 owned by the facility 100. Possibility that the facility 100 responds the power instruction message may vary depending on the type of the EMS 110 (performance or functionality). The type of the EMS 110 is determined by, for example, whether the EMS 110 has a function capable of controlling a load, a function capable of responding to the power instruction message, or a function capable of contacting with a user when the user is absent in the facility 100.

"Target equipment" is a type of a target equipment to be controlled in response to the power instruction message. Possibility that the facility 100 responds the power instruction message may vary depending on the type of the target equipment. For example, examples of the target equipment may include an equipment of which power consumption is easy to control, such as an air conditioner, an equipment of which power consumption is difficult to control, such as refrigerator, or an equipment connected to a solar cell battery, such as a power conditioner.

Here, the manager 320 may manage reliability information for each grouping target. The grouping target is at least one item from among the type of the provider that provides the communication line, the type of EMS 110 owned by the facility 100, and the type of the target equipment controlled in response to the forward power flow control message.

The controller 330 is configured by a CPU, a memory, and the like, and controls the communicator 310 and the manager 320.

For example, the controller 330 determines a transmission counterpart of the power instruction message (the facility 100) and content of the power instruction message (a control amount for the forward power flow or a control amount for the reverse power flow), based on the reliability information managed by the manager 320. Specifically, the controller 330 preferentially determines the facility 100 having high reliability as the transmission counterpart of the power instruction message. The controller 330 preferentially determines content of the power instruction message so as to assign a large control amount to the facility 100 having high reliability.

Alternatively, the controller 330 may determine an incentive to be assigned to the facility 100, based on the reliability information managed by the manager 320. The incentive is a reward for results obtained by controlling the forward power flow amount or the reverse power flow amount with respect to the power instruction message. The incentive may be a pecuniary reward or a reward, such as prizes.

### (Management Method)

A management method according to an embodiment will be described below.

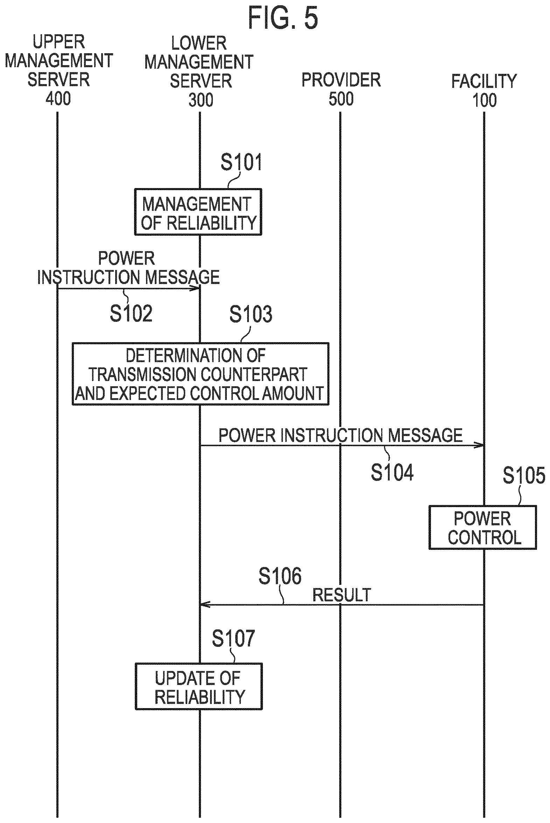

As illustrated in Fig. 5, in step S101, the lower management server 300 manages reliability information related to reliability that the facility 100 responds to the power instruction message. The reliability information are the same as illustrated in Figs. 3 and 4.

In step S102, the lower management server 300 receives a power instruction message from the upper management server 400.

In step S103, the lower management server 300 determines a transmission counterpart of the power instruction message (the facility 100) and content of the power instruction message (a control amount for the forward power flow or a control amount for the reverse power flow), based on the reliability information.

In step S104, the lower management server 300 transmits the power instruction message to the facility 100 in response to a result of step S103.

In step S105, the facility 100 controls a forward power flow amount or a reverse power flow amount in response to the power instruction message.

In step S106, the facility 100 transmits a result of step S105 (a result of power control) to the lower management server 300.

In step S107, the facility 100 updates the reliability information (reliability to be associated with "result" illustrated in Fig. 3, for example), based on a result of transmission of step S106.

### (Operation and Effect)

According to embodiments, the lower management server 300 includes a manager 320 configured to manage reliability information related to reliability that the facility 100 that responds to the power instruction message and the communicator 310 transmits the power instruction message to the facility 100 based on the reliability information. According to the above configuration, the power instruction message is transmitted based on the reliability information, and therefore, it is possible to appropriately control the forward power flow amount or the reverse power flow amount by transmission of the power instruction message.

Also, in this embodiment, the lower management server 300 belongs to an aggregator which is entrusted with management of the forward power flow amount or the reverse power flow amount of the facility 100 by the electric power provider, but, according to the above-described configuration, the aggregator may be entrusted by the electric power provider.

### [Another Embodiment 1]

Another embodiment 1 according to an embodiment will be described. Differences between embodiments will be described.

In another embodiment 1, the controller 330 of the lower management server 300 estimates an expected control amount that is a forward power flow amount or a reverse power flow amount which decreases in response to a forward power flow control message, based on at least one of real-time information indicating a current quality of communication line and schedule information indicating a schedule indicating whether responding to a power instruction message is possible.

First, the real-time information may be acquired as described below. For example, the current quality of the communication line may be monitored by the lower management server 300, and the lower management server 300 may acquire the real-time information by itself. Alternatively, the current quality of the communication line may be monitored by a provider, and the communicator 310 of the lower management server 300 may receive the real-time information from the provider. Alternatively, the current quality of the communication line may be monitored by the facility 100, and the communicator 310 of the lower management server 300 may receive the real-time information from the facility 100.

The quality of the communication line may include information indicating a received signal strength indicator (RSSI) or include information indicating a signal to interference ratio (SIR) or a signal to interference plus noise ratio (SINR). Alternatively, communication quality information may include information indicating a packet error rate. The communication quality information may include time data indicating a time at which the quality of the radio communication is measured. The communication quality information may be one piece of quality information or two or more pieces of quality information.

The real-time information may be the quality of the communication line or may be degree of a quality compared to a certain threshold value (for example, cases where the quality is lower or higher than the threshold value). Also, the real-time information may be, based on the quality, information having a high possibility that a problem occurs in the communication line or information having a low possibility that a problem occurs in the communication line.

Second, the schedule information may be acquired as described below. For example, the communicator 310 of the lower management server 300 may receive, from a provider, maintenance information of the communication line as the schedule information. Alternatively, the facility 100 may receive the maintenance information of the communication line, and the communicator 310 of the lower management server 300 may receive the maintenance information of the communication line from the provider as the facility 100.

The maintenance information of the communication line is an example of information indicating a schedule of an event having an influence on a future communication quality of the communication line. As influence affecting the communication quality, it is possible to consider for example, a case where communication itself is not capable of being performed, a case where a communication speed decreases, a case where the amount of data capable of being communicated is limited, or the like.

Events affecting the future communication quality of the communication line may be not only the maintenance of the communication line, but also temporal conditions under which congestion of the communication line is expected (date of events, such as new year's day, Christmas, concerts, or sports). These events may include geographical conditions (places for events such as concerts or sports).

In another embodiment 1, the schedule information received from the facility 100 may be "no-participation schedule" defined in the Open ADR standard. The no-participation schedule is a message indicating that the facility 100 is not capable of responding to the power instruction message.

Here, the no-participation schedule may include a reason why it is impossible to respond to the power instruction message. The reason may be a reason that the maintenance of the communication line is performed or may be a reason that congestion of the communication line is expected. Alternatively, the reason may be a reason resulted from power control of the facility 100 (for example, a distributed power source such as a storage battery is in failure, the power consumption of the equipment is capable of being controlled, or the like). Also, the no-participation schedule may include a time point at which it is possible to respond to the power instruction message.

### (Management Method)

A management method according to another embodiment 1 will be described below.

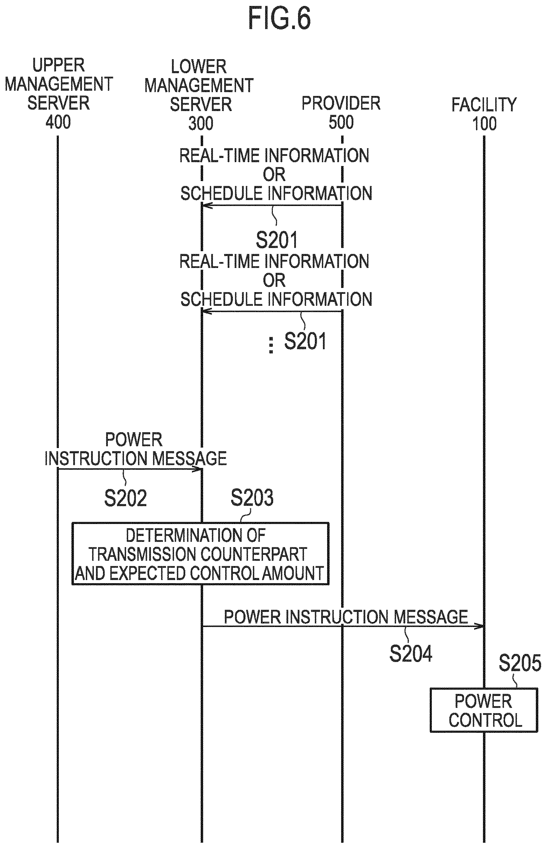

First, the case where the real-time information or the schedule information is acquired from the provider is described below with reference to Fig. 6.

As illustrated in Fig. 6, in step S201, the lower management server 300 receives the real-time information or the schedule information from the provider 500. The real-time information or the schedule information may be transmitted to the lower management server 300 from the provider 500 periodically or may be transmitted to the lower management server 300 from the provider 500 in response to a request from the lower management server 300.

In step S202, the lower management server 300 receives a power instruction message from the upper management server 400.

In step S203, the lower management server 300 determines a transmission counterpart of the power instruction message (the facility 100) and content of the power instruction message (a control amount for the forward power flow or a control amount for the reverse power flow), based on the real-time information or the schedule information.

In step S204, the lower management server 300 transmits the power instruction message to the facility 100 in response to a result of step S203.

In step S205, the facility 100 controls a forward power flow amount or a reverse power flow amount in response to the power instruction message.

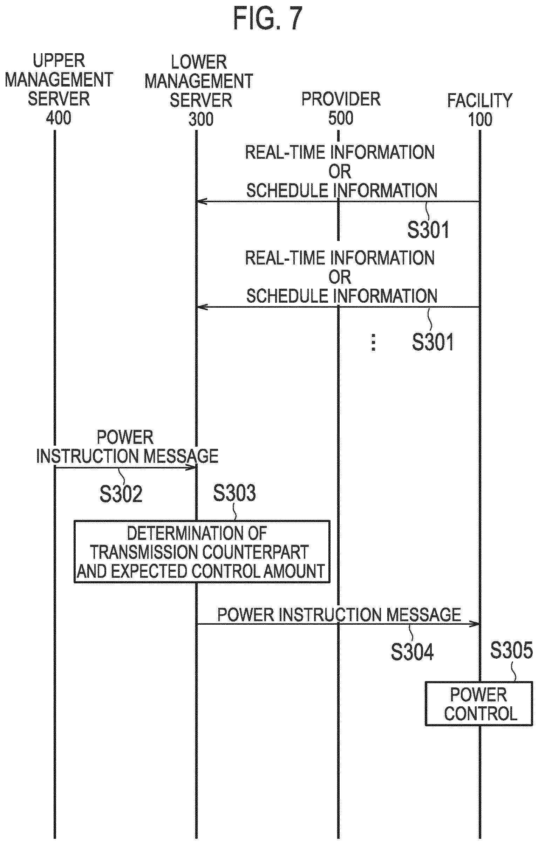

Second, the case where the real-time information or the schedule information is acquired from the facility 100 is described below with reference to Fig. 7.

In step S301, the lower management server 300 receives the real-time information or the schedule information from the facility 100. The real-time information or the schedule information may be transmitted to the lower management server 300 from the facility 100 periodically or may be transmitted to the lower management server 300 from the facility 100 in response to a request from the lower management server 300. Also, the facility 100 receives the maintenance information of the communication line from the provider 500 in advance. It is not limited to the case where the maintenance information is received in advance and the reception may be performed whenever it is required.

In step S302, the lower management server 300 receives a power instruction message from the upper management server 400.

In step S303, the lower management server 300 determines a transmission counterpart of the power instruction message (the facility 100) and content of the power instruction message (content of control, a control amount for the forward power flow or a control amount for the reverse power flow), based on the real-time information or the schedule information.

In step S304, the lower management server 300 transmits the power instruction message to the facility 100 in response to a result of step S303.

In step S305, the facility 100 controls a forward power flow amount or a reverse power flow amount in response to the power instruction message.

### (Operation and Effect)

In another embodiment 1, the lower management server 300 includes a controller configured to estimate an expected control amount or an expected increase amount that is a forward power flow amount or a reverse power flow amount which varies in response to the power instruction message, based on at least one of real-time information indicating a current quality of communication line and schedule information indicating a schedule indicating whether responding to a power instruction message is possible. According to the above configuration, the expected control amount is reflected base on at least one of the real-time information and the schedule information, and therefore, it is possible to appropriately control the forward power flow amount or the reverse power flow amount by transmission of the power instruction message.

Also, in another embodiment 1, the lower management server 300 belongs to an aggregator which is entrusted with management of the forward power flow amount or the reverse power flow amount of the facility 100 by the electric power provider, but, according to the above-described configuration, the aggregator may accept the entrustment by the electric power provider.

### [Another Embodiment 2]

Another embodiment 2 is described below. Differences from the embodiment are described below.

According to the another embodiment 2, the manager 320 of the lower management server 300 may manage, as reliability information, results of reception of a response message including whether an instruction to the distributed power source 130, control for the forward power flow amount or the reverse power flow amount has been performed in response to the power instruction message. The manager 320 may manage, as reliability information, control methods for controlling the forward power flow amount or the reverse power flow amount in the facility 100. The manager 320 may manage, as reliability information, information about a person in charge of control for the forward power flow amount or the reverse power flow amount in the facility 100.

Reception results may be a response time taken from transmission of the power instruction message to reception of a response message or information indicating whether the response message for the power instruction message is received (for example, reception probability). For example, as the response time is shorter, the reliability increases, and as the reception probability is higher, the reliability increases.

The control method may be a type of a power saving mode for controlling the forward power flow amount, may be a type of the load 120 for controlling the forward power flow amount, or may be power consumption of the load 120 for controlling the forward power flow amount. The control method may be a type of an output control mode for controlling the reverse power flow amount, may be a type of the distributed power source 130 for controlling the reverse power flow amount, or may be one of a generated power amount, a discharged power amount and a stored power amount of the distributed power source 130 for controlling the reverse power flow amount. It is possible to determine possibility that the forward power flow amount or the reverse power flow amount is controlled by the control method, and as the possibility is higher, the reliability increases.

The information of the person in charge may be identification information for identifying the person in charge or may be status indicating whether the person in charge is capable of performing control for the forward power flow amount or the reverse power flow amount. The status is information indicating whether the person in charge is present in a management room. It is possible to determine possibility that the forward power flow amount or the reverse power flow amount is controlled by the above information, and as the possibility is higher, the reliability increases.

According to the another embodiment 2, the manager 320 may manage a reply period for a response message including whether control for the forward power flow amount or the reverse power flow amount has been performed in response to the power instruction message. The lower management server 300 is capable of figuring out whether a control plan is complied with by reception of the response message. The control plan is the transmission counterpart of the power instruction message (the facility 100) and content of the power instruction message (control amount for forward power flow or control amount for the reverse power flow (step S103 illustrated in Fig. 5, step S203 illustrated in Fig. 6 and step S303 illustrated in Fig. 7). The lower management server 300 may avoid the continuation of a status where the facility 100 that may not acquire the response message does not know whether to control the forward power flow amount or the reverse power flow amount, through management of the replay period. In this regards, the lower management server 300 is capable of correcting the control plan as described above.

### (Management Method)

A management method according to another embodiment 2 will be described below. Here, a case where three facilities 100A to 100C are installed is taken as an example.

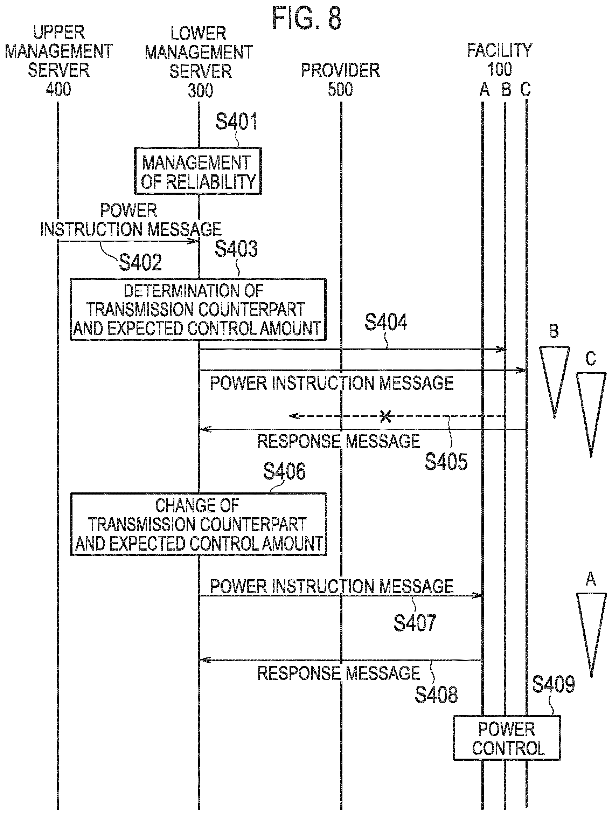

As illustrated in Fig. 8, in step S401, the lower management server 300 manages reliability information related to reliability that the facility 100 responds to the power instruction message. The reliability information, as described above, includes reception results of the response message, the control method for controlling the forward power flow amount or the reverse power flow amount, and the person in charge of control for the forward power flow amount or the reverse power flow amount. The reliability information may include any piece of information illustrated in Figs. 3 and 4.

In step S402, the lower management server 300 receives a power instruction message from the upper management server 400.

In step S403, the lower management server 300 determines a transmission counterpart of the power instruction message (the facility 100) and content of the power instruction message (a control amount for the forward power flow or a control amount for the reverse power flow), based on the reliability information. Here, the lower management server 300 selects the facilities 100B and 100C as the transmission counterpart of the power instruction message.

In step S404, the lower management server 300 transmits the power instruction message to the facility 100 according to a result of step S403. Here, the lower management server 300 transmits the power instruction message to the facilities 100B and 100C. Also, the lower management server 300 triggers a timer (herein, timers B and C) for counting the time elapsed from transmission of the power instruction message. The expired times of the timer B and the timer C (the reply time limit) may be determined based on the reception results (response time) of the response message managed as the reliability information. The expired times of the timer B and the timer C may be different from each other.

In step S405, the lower management server 300 receives the response message with respect to the power instruction message. Here, the lower management server 300 receives the response message from the facility 100C before the timer C is expired, but does not receive the response message from the facility 100B before the timer B is expired.

In step S406, the lower management server 300 changes a transmission counterpart of the power instruction message (the facility 100) and content of the power instruction message (a control amount for the forward power flow or a control amount for the reverse power flow), based on a reception status of the response message. Specifically, since the response message may not be received from the facility 100B, the control plan determined in step S403 is modified in order to compensate the control amount assigned to the facility 100B. Here, the lower management server 300 newly selects the facility 100A as the transmission counterpart of the power instruction message.

In step S407, the lower management server 300 transmits the power instruction message to the facility 100 in response to a result of step S403. Here, the lower management server 300 transmits the power instruction message to the facility 100A. Also, the lower management server 300 triggers a timer (herein, timer A) for counting the time elapsed from transmission of the power instruction message. The expired time of the timer A (the reply period) may be determined based on the reception results (response time) of the response message managed as the reliability information.

In step S408, the lower management server 300 receives the response message with respect to the power instruction message. Here, the lower management server 300 receives the response message from the facility 100A before the timer A is expired.

In step S409, the facility 100 controls a forward power flow amount or a reverse power flow amount in response to the power instruction message. Here, the facilities 100A and 100C transmits a response message with respect to the power instruction message and controls a forward power flow amount or a reverse power flow amount in response to the power instruction message.

In step S407 as described above, the lower management server 300 may transmit the power instruction message not only to the facility 100A but also to the facility 100C again. For example, when the content of the power instruction message with respect to the facility 100C is changed according to modification of the control plan in step S406, the power instruction message may be again transmitted to the facility 100.

In step S406, the facility 100 having high reliability based on reception results of the response message may be selected as the transmission counterpart of the power instruction message. For example, the facility 100 having a shorter response time may be selected as the transmission counterpart of the power instruction message, and the facility 100 having high reception probability may be selected as the transmission counterpart of the power instruction message. In another embodiment 2, the power instruction message is transmitted to the facility 100 as the transmission counterpart. However, the present embodiment is not limited to the another embodiment 2. The power instruction message may be transmitted to the equipment (the load 120 or the distributed power source 130) as the transmission counterpart. That is, control for a forward power flow amount or a reverse power flow amount may be performed for each of the load 120 and the distributed power source 130, rather than each facility 100.

### [Other Embodiments]

The present invention is explained through the above-described embodiment, but it must not be assumed that this invention is limited by the statements and the drawings constituting a part of this disclosure. From this disclosure, various alternative embodiments, examples, and operational technologies within the scope of the appended claims will become apparent to those skilled in the art.

The manager 320 of the lower management server 300 may update reliability information from time at which a first power instruction message is transmitted as the power instruction message to time at which a second power instruction message is transmitted. Therefore, in the case of transmitting the second power instruction message, a result indicating whether the forward power flow or the reverse power flow is actually controlled in response to the first power instruction message is reflected to the reliability information.

The communicator 310 of the lower management server 300 may transmit the reliability information managed by the manager 320 to the facility 100. Therefore, it is possible for the facility 100 to figure out evaluation of the facility 100 (reliability information). Also, in the case of updating reliability, the updated reliability information may be transmitted to the facility 100 and, at this time, the reason why the reliability information is changed may be transmitted together therewith.

The evaluation of the facility 100 (reliability information) may be reliability information managed by the manager 320 or may be a rank (rank A to rank C, etc.) set based on the reliability information. By classifying facilities 100 for each rank in advance, the lower management server 300 may effectively select a facility 100 in the case of transmitting the power instruction message. Incentive assigned to the facility 100 may be determined by the rank set based on the reliability information.

The communicator 310 of the lower management server 300 may transmit a test message to the facility 100. As the test message, it is possible to use a packet which has a small amount of data and hardly affects other communications or a message of which the data mount is equivalent to that of the power instruction message, or use a power instruction message which has been used in the past.

The transmission of the test message may be performed according to a method complying with the Open ADR standard. Specifically, it is possible to use oadrUpdateReport in the Open ADR standard for the transmission of the test message. Also, transmission and reception of the test message may be performed in a periodic manner and may be performed by so-called heart-bit operation. Also, if possible, the oadrCreateReport in the Open ADR standard may be used.

The manager 320 of the lower management server 300 may update the reliability information according to a transmission result of the test message. For example, it is possible to measure a quality (for example, the above-described real-time information) of the network 200 (the communication line) through the transmission result of the test message.

Also, the lower management server 300 may monitor the communication line by using the heart-beat operation. For example, in the heart-beat operation, the lower management server 300 receives, from the facility 100, a confirmation message for confirming a communication state of the network 200. The facility 100 may transmit the confirmation message in response to a request from the lower management server 300 or automatically transmit the confirmation message, rather than in response to the request from the lower management server 300. As the confirmation message, a message selected from predetermined messages is used. For example, a report message for reporting a state of the distributed power source 130 owned by the facility 100 (for example, oadrUpdateReport) may be used as the confirmation message.

Here, the report message used as the confirmation message is transmitted in response to a report request message (for example, oadrCreateReport) received from the lower management server 300. The report message used as the confirmation message may be a message including no information indicating the state of the distributed power source 130. That is, the report request message may be a message requesting transmission of a message including no information indicating the state of the distributed power source 130. Also, the report message may be an empty message. The empty message is a message not including other information than a message format.

Alternatively, the report message used as the confirmation message may be a message including a smallest amount of data, from among pieces of information indicating the state of the distributed power source 130. That is, the report request message may be a message requesting transmission of a message including information including a smallest amount of data (information indicating the state of the distributed power source 130).

The lower management server 300 may select the facility 100 which transmits the power instruction message based on both of reliability information and real-time information or schedule information and, in this case, is capable of controlling a forward power flow amount or a reverse power flow amount suitably and effectively.

The lower management server 300 may determine a control method for the facility 100 and transmit a message indicating the determined control method to the facility 100, based on the reliability information of the facility 100. For example, a message indicating a control method for realizing a larger control amount as the facility 100 has higher reliability (for example, power saving mode or output control mode) may be transmitted to the facility 100.

## Claims

1. A management server **(300)** comprising:
a transmitter **(310)** configured to transmit a power instruction message through a communication line, wherein the power instruction message includes a power control message requesting control for a distributed power source **(130)** installed in a facility **(100),** or a forward power flow control message requesting control for a forward power flow amount from a power grid to the facility **(100),** or a reverse power flow control message requesting control for a reverse power flow amount from the facility **(100)** to the power grid; and
a manager **(320)** configured to calculate and manage reliability information related to reliability that the facility (**100**) responds to the power instruction message, wherein the manager (**320**) is configured to calculate and manage the reliability information from at least one item from among a type of a provider which provides the communication line, a type of a power management system owned by the facility (**100**), and a type of a target equipment installed in the facility (**100**) and controlled in response to the forward power flow control message,
wherein the transmitter (**310**) is configured to transmit the power instruction message to the facility (**100**), based on the reliability information.

2. The management server (**300**) according to claim 1, wherein the manager (**320**) is configured to calculate and manage the reliability information from whether there is a substitutional means that transmits the power instruction message to the facility **(100)** even when quality of the communication line is below a threshold value.

3. The management server **(300)** according to claim 1 or 2, wherein the manager **(320)** is configured to calculate and manage the reliability information from a recovery time from when the quality of the communication line is below the threshold value to when the quality of the communication line is above the threshold value.

4. The management server **(300)** according to any one of claims 1 to 3 wherein the manager **(320)** is configured to calculate and manage the reliability information from an operation rate of the communication line.

5. The management server **(300)** according to any one of claims 1 to 4, wherein the manager **(320)** is configured to calculate and manage the reliability information from whether the facility **(100)** has a function that notifies the management server **(300)** of a schedule in which the quality of the communication line is below the threshold value.

6. The management server **(300)** according to any one of claims 1 to 5, wherein the reliability information comprises information about a control method that controls the forward power flow amount or the reverse power flow amount in the facility **(100).**

7. The management server **(300)** according to any one of claims 1 to 6, wherein the reliability information comprises information about a person in charge of control for the forward power flow amount or the reverse power flow amount in the facility **(100).**

8. The management server **(300)** according to any one of claims 1 to 7, wherein the manager **(320)** is configured to calculate and manage the reliability information from a reply time limit of a response message including whether to perform control for the forward power flow amount or the reverse power flow amount in response to the power instruction message.

9. The management server **(300)** according to any one of claims 1 to 8, wherein the manager **(320)** is configured to calculate and manage reliability information for each grouping target, and
the grouping target is at least one item from among a type of a power management system owned by the facility **(100),** a type of a target equipment installed in the facility **(100)** and controlled in response to the forward power flow control message, and information related to a provider which provides the communication line.

10. The management server **(300)** according to any one of claims 1 to 9, wherein the transmitter **(310)** is configured to transmit the reliability information managed by the manager **(320)** to the facility **(100).**

11. The management server **(300)** according to any one of claims 1 to 10, further comprising a controller configured to determine incentive to be assigned to the facility **(100)** according to the reliability information managed by the manager **(320).**

12. The management server **(300)** according to any one of claims 1 to 11, wherein the transmitter **(310)** is configured to transmit a test message to the facility **(100),** and
the manager **(320)** is configured to update the reliability information according to a transmission result of the test message.

13. The management server **(300)** according to any one of claims 1 to 12, wherein the manager **(320)** is configured to calculate and manage the reliability information by assignment of weights to reliabilities for two or more items from among the type of the provider, the type of the power management system, and the type of the target equipment.

14. A management server **(300)** comprising:
a transmitter **(310)** configured to transmit a power instruction message through a communication line, wherein the power instruction message includes a power control message requesting control for a distributed power source **(130)** installed in a facility **(100),** or a forward power flow control message requesting control for a forward power flow amount from a power grid to the facility **(100),** or a reverse power flow control message requesting control for a reverse power flow amount from the facility **(100)** to the power grid; and
a controller configured to estimate an expected control amount that is the forward power flow amount or the reverse power flow amount which decreases in response to the power instruction message, based on schedule information indicating a schedule as to whether responding to the power instruction message is possible.

15. The management server **(300)** according to claim 14, wherein the schedule information is information indicating a schedule of an event affecting a future communication quality of the communication line.

16. The management server **(300)** according to claim 14, further comprising a receiver configured to receive the schedule information from the facility **(100),** wherein
the schedule information received from the facility **(100)** includes a reason why it is impossible to respond to the power instruction message.

17. A management method comprising:
a step A of transmitting a power instruction message by a management server **(300)** through a communication line, wherein the power instruction message includes a power control message requesting control for a distributed power source **(130)** installed in a facility **(100),** or a forward power flow control message requesting control for a forward power flow amount from a power grid to the facility **(100),** or a reverse power flow control message requesting control for a reverse power flow amount from the facility **(100)** to the power grid; and
a step B of calculating and managing, by the management server **(300),** reliability information related to reliability that the facility **(100)** responds to the power instruction message, wherein the reliability information is calculated and managed from at least one item from among a type of a provider which provides the communication line, a type of a power management system owned by the facility **(100),** and a type of a target equipment installed in the facility **(100)** and controlled in response to the forward power flow control message,
wherein the step A includes a step of transmitting the power instruction message to the facility **(100),** based on the reliability information.

18. A management method comprising:
a step A of transmitting, by a management server **(300),** a power instruction message including a power control message requesting control for a distributed power source **(130)** installed in a facility **(100),** or a forward power flow control message requesting control for a forward power flow amount from a power grid to the facility **(100),** or a reverse power flow control message requesting control for a reverse power flow amount from the facility **(100)** to the power grid, through a communication line; and
a step B of estimating, by the management server **(300),** an expected control amount that is a forward power flow amount or a reverse power flow amount which decreases in response to a forward power flow control message, based on schedule information indicating a schedule as to whether responding to the power instruction message is possible.

## Patentansprüche

1. Verwaltungsserver **(300)** mit:
einem Sender **(310),** der konfiguriert ist, eine Leistungsanweisungsmitteilung durch eine Kommunikationsleitung zu senden, wobei die Leistungsanweisungsmitteilung eine Leistungssteuerungsmitteilung, die eine Steuerung für eine verteilte Leistungsquelle **(130),** die in einer Anlage **(100)** installiert ist, oder eine Vorwärtsleistungsflusssteuerungsmitteilung, die eine Steuerung für eine Vorwärtsleistungsflussgröße von einem Stromnetz zu der Anlage **(100)** anfordert, oder eine Rückleistungsflusssteuerungsmitteilung aufweist, die eine Steuerung für eine Rückleistungsflussgröße von der Anlage **(100)** zu dem Stromnetz anfordert, und
eine Verwaltungseinrichtung **(320),** die konfiguriert ist, Zuverlässigkeitsinformationen in Bezug auf eine Zuverlässigkeit davon, dass die Anlage **(100)** auf die Leistungsanweisungsmitteilung antwortet, zu berechnen und zu verwalten, wobei die Verwaltungseinrichtung **(320)** Konfiguriert ist, die Zuverlässigkeitsinformationen anhand zumindest eines Punktes aus einer Art eines Providers, der die Kommunikationsleitung bereitstellt, einer Art eines Leistungsverwaltungssystems, das von der Anlage **(100)** besessen wird, und einer Art einer Zielausrüstung, die in der Anlage **(100)** installiert ist und in Antwort auf die Vorwärtsleistungsflusssteuerungsmitteilung gesteuert wird,
wobei der Sender **(310)** konfiguriert ist, die Leistungsanweisungsmitteilung zu der Anlage **(100)** auf der Grundlage der Zuverlässigkeitsinformationen zu senden.

2. Verwaltungsserver **(300)** nach Anspruch 1, wobei die Verwaltungseinrichtung **(320)** konfiguriert ist, die Zuverlässigkeitsinformationen anhand daran zu berechnen und zu verwalten, ob es eine Ersatzeinrichtung gibt, die die Leistungsanweisung zu der Anlage **(100)** sendet, wenn die Qualität der Kommunikationsleistung unterhalb eines Schwellenwerts ist.

3. Verwaltungsserver **(300)** nach Anspruch 1 oder 2, wobei die Verwaltungseinrichtung **(320)** konfiguriert ist, die Zuverlässigkeitsinformationen anhand einer Wiederherstellungszeit von dem Zeitpunkt, zu dem die Qualität der Kommunikationsleitung unterhalb des Schwellenwerts ist, bis zu dem Zeitpunkt, zu dem die Qualität der Kommunikationsleistung oberhalb des Schwellenwerts ist, zu berechnen und zu verwalten.

4. Verwaltungsserver **(300)** nach einem der Ansprüche 1 bis 3, wobei die Verwaltungseinrichtung **(320)** konfiguriert ist, die Zuverlässigkeitsinformationen anhand einer Betriebsrate der Kommunikationsleitung zu berechnen und zu verwalten.

5. Verwaltungsserver **(300)** nach einem der Ansprüche 1 bis 4, wobei die Verwaltungseinrichtung **(320)** konfiguriert ist, die Zuverlässigkeitsinformationen anhand davon zu berechnen und zu verwalten, ob die Anlage **(100)** eine Funktion aufweist, die dem Verwaltungsserver **(300)** einen Zeitplan mitteilt, in dem die Qualität der Kommunikationsleitung unterhalb des Schwellenwerts ist.

6. Verwaltungsserver **(300)** nach einem der Ansprüche 1 bis 5, wobei die Zuverlässigkeitsinformationen Informationen bezüglich eines Steuerungsverfahrens aufweist, das die Vorwärtsleistungsflussgröße oder die Rückleistungsflussflussgröße in der Anlage **(100)** steuert.

7. Verwaltungsserver **(300)** nach einem der Ansprüche 1 bis 6, wobei die Zuverlässigkeitsinformationen Informationen bezüglich einer Person aufweist, die für die Steuerung der Vorwärtsleistungsflussgröße oder der Rückleistungsflussflussgröße in der Anlage **(100)** verantwortlich ist.

8. Verwaltungsserver **(300)** nach einem der Ansprüche 1 bis 7, wobei die Verwaltungseinrichtung **(320)** konfiguriert ist, die Zuverlässigkeitsinformationen anhand einer Antwortzeitgrenze einer Antwortmitteilung, die aufweist, ob eine Steuerung für die Vorwärtsleistungsflussgröße oder die Rückleistungsflussgröße in Reaktion auf die Leistungsanweisung durchzuführen ist, zu berechnen und zu verwalten.

9. Verwaltungsserver **(300)** nach einem der Ansprüche 1 bis 8, wobei die Verwaltungseinrichtung **(320)** konfiguriert ist, die Zuverlässigkeitsinformationen für jedes Gruppierungsziel zu berechnen und zu verwalten,
wobei das Gruppierungsziel zumindest einen Punkt aus einer Art eines Leistungsverwaltungssystems, das durch die Anlage **(100)** besessen wird, eine Art einer Zielausrüstung, die in der Anlage **(100)** installiert ist und in Reaktion auf die Vorwärtsleistungsflusssteuerungsmitteilung gesteuert wird, und Informationen in Bezug auf einen Provider, der die Kommunikationsleitung bereitstellt, ist.

10. Verwaltungsserver **(300)** nach einem der Ansprüche 1 bis 9, wobei der Sender **(310)** konfiguriert ist, die durch die Verwaltungseinrichtung **(320)** verwalteten Zuverlässigkeitsinformationen zu der Anlage **(100)** zu senden.

11. Verwaltungsserver **(300)** nach einem der Ansprüche 1 bis 10, weiterhin mit einer Steuerungseinrichtung, die konfiguriert ist, einen Anreiz zu bestimmen, der der Anlage **(100)** entsprechend den durch die Verwaltungseinrichtung **(320)** verwalteten Zuverlässigkeitsinformationen zuzuordnen ist.

12. Verwaltungsserver **(300)** nach einem der Ansprüche 1 bis 11, wobei der Sender **(310)** konfiguriert ist, eine Testmitteilung zu der Anlage **(100)** zu senden, und
die Verwaltungseinrichtung **(320)** konfiguriert ist, die Zuverlässigkeitsinformationen auf der Grundlage des Sendeergebnisses der Testmitteilung zu aktualisieren.

13. Verwaltungsserver **(300)** nach einem der Ansprüche 1 bis 12, wobei die Verwaltungseinrichtung **(320)** konfiguriert ist, die Zuverlässigkeitsinformationen durch Zuordnung von Gewichten zu Zuverlässigkeiten für zwei oder mehr Punkte aus der Art des Providers, der Art des Leistungsverwaltungssystems und der Art der Zielausrüstung zu berechnen und zu verwalten.

14. Verwaltungsserver **(300)** mit:
einem Sender **(310),** der konfiguriert ist, eine Leistungsanweisungsmitteilung durch eine Kommunikationsleitung zu senden, wobei die Leistungsanweisungsmitteilung eine Leistungssteuerungsmitteilung, die eine Steuerung für eine verteilte Leistungsquelle **(130),** die in einer Anlage **(100)** installiert ist, oder eine Vorwärtsleistungsflusssteuerungsmitteilung, die eine Steuerung für eine Vorwärtsleistungsflussgröße von einem Stromnetz zu der Anlage **(100)** anfordert, oder eine Rückleistungsflusssteuerungsmitteilung aufweist, die eine Steuerung für eine Rückleistungsflussgröße von der Anlage **(100)** zu dem Stromnetz anfordert, und
einer Steuerungseinrichtung, die konfiguriert ist, eine erwartete Steuerungsgröße, die eine Vorwärtsleistungsflussgröße oder eine Rückleistungsflussgröße ist, die sich in Reaktion auf die Leistungsanweisungsmitteilung verringert, auf der Grundlage von Zeitplaninformation, die einen Zeitplan angeben, ob ein Antworten auf die Leistungsanweisungsmitteilung möglich ist.

15. Verwaltungsserver **(300)** nach Anspruch 14, wobei die Zeitplaninformationen Informationen sind, die einen Zeitplan eines Ereignisses angeben, das eine zukünftige Kommunikationsqualität der Kommunikationsleitung beeinträchtigt.

16. Verwaltungsserver **(300)** nach Anspruch 14, weiterhin mit einem Empfänger, der konfiguriert ist, die Zeitplaninformationen aus der Anlage **(100)** zu empfangen, wobei
die aus der Anlage **(100)** empfangenen Zeitplaninformationen einen Grund aufweisen, warum es unmöglich ist, auf die Leistungsinstruktionsmitteilung zu antworten.

17. Verwaltungsverfahren mit:
einem Schritt A des Sendens einer eine Leistungsanweisungsmitteilung von einem Verwaltungsserver **(300)** durch eine Kommunikationsleitung, wobei die Leistungsanweisungsmitteilung eine Leistungssteuerungsmitteilung, die eine Steuerung für eine verteilte Leistungsquelle **(130),** die in einer Anlage **(100)** installiert ist, oder eine Vorwärtsleistungsflusssteuerungsmitteilung, die eine Steuerung für eine Vorwärtsleistungsflussgröße von einem Stromnetz zu der Anlage **(100)** anfordert, oder eine Rückleistungsflusssteuerungsmitteilung aufweist, die eine Steuerung für eine Rückleistungsflussgröße von der Anlage **(100)** zu dem Stromnetz anfordert, und
einem Schritt B des Berechnens und Verwaltens, durch den Verwaltungsserver **(300),** von ist, Zuverlässigkeitsinformationen in Bezug auf eine Zuverlässigkeit davon, dass die Anlage **(100)** auf die Leistungsanweisungsmitteilung antwortet, wobei die Zuverlässigkeitsinformationen anhand zumindest eines Punktes aus einer Art eines Providers, der die Kommunikationsleitung bereitstellt, einer Art eines Leistungsverwaltungssystems, das von der Anlage **(100)** besessen wird, und einer Art einer Zielausrüstung, die in der Anlage **(100)** installiert ist und in Antwort auf die Vorwärtsleistungsflusssteuerungsmitteilung gesteuert wird, berechnet und verwaltet werden,
wobei der Schritt A einen Schritt des Sendens der Leistungsanweisungsmitteilung zu der Anlage **(100)** auf der Grundlage der Zuverlässigkeitsinformationen aufweist.

18. Verwaltungsverfahren mit:
einem Schritt A des Sendens einer eine Leistungsanweisungsmitteilung von einem Verwaltungsserver **(300)** durch eine Kommunikationsleitung, wobei die Leistungsanweisungsmitteilung eine Leistungssteuerungsmitteilung, die eine Steuerung für eine verteilte Leistungsquelle **(130),** die in einer Anlage **(100)** installiert ist, oder eine Vorwärtsleistungsflusssteuerungsmitteilung, die eine Steuerung für eine Vorwärtsleistungsflussgröße von einem Stromnetz zu der Anlage **(100)** anfordert, oder eine Rückleistungsflusssteuerungsmitteilung aufweist, die eine Steuerung für eine Rückleistungsflussgröße von der Anlage **(100)** zu dem Stromnetz anfordert, und
einem Schritt B des Schätzens, durch den Verwaltungsserver **(300),** einer erwarteten Steuerungsgröße, die eine Vorwärtsleistungsflussgröße oder eine Rückleistungsflussgröße ist, die sich in Reaktion auf die Leistungsanweisungsmitteilung verringert, auf der Grundlage von Zeitplaninformation, die einen Zeitplan angeben, ob ein Antworten auf die Leistungsanweisungsmitteilung möglich ist.

## Revendications

1. Serveur de gestion (300) comprenant :
un émetteur (310) configuré pour transmettre un message d'instruction d'alimentation par l'intermédiaire d'une ligne de communication, dans lequel le message d'instruction d'alimentation comporte un message de commande d'alimentation demandant une commande pour une source d'alimentation répartie (130) installée dans une installation (100), ou un message de commande de flux d'alimentation vers l'avant demandant une commande pour une quantité de flux d'alimentation vers l'avant depuis un réseau électrique vers l'installation (100), ou un message de commande de flux d'alimentation inverse demandant une commande pour une quantité de flux d'alimentation inverse depuis l'installation (100) vers le réseau électrique ; et
un gestionnaire (320) configuré pour calculer et gérer des informations de fiabilité liées à la fiabilité de la réponse de l'installation (100) au message d'instruction d'alimentation, dans lequel le gestionnaire (320) est configuré pour calculer et gérer les informations de fiabilité à partir d'au moins un élément parmi un type d'un fournisseur qui fournit la ligne de communication, un type d'un système de gestion d'alimentation appartenant à l'installation (100), et un type d'un équipement cible installé dans l'installation (100) et commandé en réponse au message de commande de flux d'alimentation vers l'avant,
dans lequel l'émetteur (310) est configuré pour transmettre le message d'instruction d'alimentation à l'installation (100), sur la base des informations de fiabilité.

2. Serveur de gestion (300) selon la revendication 1, dans lequel le gestionnaire (320) est configuré pour calculer et gérer les informations de fiabilité, à partir de l'existence ou non d'un moyen de substitution qui transmet le message d'instruction d'alimentation à l'installation (100) même lorsqu'une qualité de la ligne de communication est en dessous d'une valeur de seuil.

3. Serveur de gestion (300) selon la revendication 1 ou 2, dans lequel le gestionnaire (320) est configuré pour calculer et gérer les informations de fiabilité, à partir d'un temps de récupération depuis le moment où la qualité de la ligne de communication est en dessous de la valeur de seuil jusqu'au moment où la qualité de la ligne de communication est au--dessus de la valeur de seuil.

4. Serveur de gestion (300) selon l'une quelconque des revendications 1 à 3, dans lequel le gestionnaire (320) est configuré pour calculer et gérer les informations de fiabilité à partir d'une vitesse de fonctionnement de la ligne de communication.

5. Serveur de gestion (300) selon l'une quelconque des revendications 1 à 4, dans lequel le gestionnaire (320) est configuré pour calculer et gérer les informations de fiabilité à partir de l'existence ou non d'une fonction de l'installation (100) qui notifie au serveur de gestion (300) une planification dans laquelle la qualité de la ligne de communication est en dessous de la valeur de seuil.

6. Serveur de gestion (300) selon l'une quelconque des revendications 1 à 5, dans lequel les informations de fiabilité comprennent des informations sur un procédé de commande qui commande la quantité de flux d'alimentation vers l'avant ou la quantité de flux d'alimentation inverse dans l'installation (100).

7. Serveur de gestion (300) selon l'une quelconque des revendications 1 à 6, dans lequel les informations de fiabilité comprennent des informations sur une personne en charge de la commande pour la quantité de flux d'alimentation vers l'avant ou la quantité de flux d'alimentation inverse dans l'installation (100).

8. Serveur de gestion (300) selon l'une quelconque des revendications 1 à 7, dans lequel le gestionnaire (320) est configuré pour calculer et gérer les informations de fiabilité à partir d'une limite de temps de réponse d'un message de réponse précisant s'il faut réaliser une commande pour la quantité de flux d'alimentation vers l'avant ou pour la quantité de flux d'alimentation inverse en réponse au message d'instruction d'alimentation.

9. Serveur de gestion (300) selon l'une quelconque des revendications 1 à 8, dans lequel le gestionnaire (320) est configuré pour calculer et gérer des informations de fiabilité pour chaque cible de regroupement, et
la cible de regroupement est au moins un élément parmi un type d'un système de gestion d'alimentation appartenant à l'installation (100), un type d'un équipement cible installé dans l'installation (100) et commandé en réponse au message de commande de flux d'alimentation vers l'avant, et des informations liées à un fournisseur qui fournit la ligne de communication.

10. Serveur de gestion (300) selon l'une quelconque des revendications 1 à 9, dans lequel l'émetteur (310) est configuré pour transmettre les informations de fiabilité gérées par le gestionnaire (320) à l'installation (100).

11. Serveur de gestion (300) selon l'une quelconque des revendications 1 à 10, comprenant en outre une unité de commande configurée pour déterminer une incitation d'attribution à l'installation (100) selon les informations de fiabilité gérées par le gestionnaire (320).

12. Serveur de gestion (300) selon l'une quelconque des revendications 1 à 11, dans lequel l'émetteur (310) est configuré pour transmettre un message de test à l'installation (100), et
le gestionnaire (320) est configuré pour mettre à jour les informations de fiabilité selon un résultat de transmission du message de test.

13. Serveur de gestion (300) selon l'une quelconque des revendications 1 à 12, dans lequel le gestionnaire (320) est configuré pour calculer et gérer les informations de fiabilité par attribution de poids aux fiabilités pour deux éléments ou plus parmi le type du fournisseur, le type du système de gestion d'alimentation, et le type de l'équipement cible.

14. Serveur de gestion (300) comprenant :
un émetteur (310) configuré pour transmettre un message d'instruction d'alimentation par l'intermédiaire d'une ligne de communication, dans lequel le message d'instruction d'alimentation comporte un message de commande d'alimentation demandant une commande pour une source d'alimentation répartie (130) installée dans une installation (100), ou un message de commande de flux d'alimentation vers l'avant demandant une commande pour une quantité de flux d'alimentation vers l'avant depuis un réseau électrique vers l'installation (100), ou un message de commande de flux d'alimentation inverse demandant une commande pour une quantité de flux d'alimentation inverse depuis l'installation (100) vers le réseau électrique ; et
une unité de commande configurée pour estimer une quantité de commande attendue qui est la quantité de flux d'alimentation vers l'avant ou la quantité de flux d'alimentation inverse qui diminue en réponse au message d'instruction d'alimentation, sur la base d'informations de planification indiquant une planification quant à la possibilité de répondre au message d'instruction d'alimentation.

15. Serveur de gestion (300) selon la revendication 14, dans lequel les informations de planification sont des informations indiquant une planification d'un événement affectant une qualité de communication future de la ligne de communication.

16. Serveur de gestion (300) selon la revendication 14, comprenant en outre un récepteur configuré pour recevoir les informations de planification à partir de l'installation (100), dans lequel
les informations de planification reçues à partir de l'installation (100) comportent une raison pour laquelle il est impossible de répondre au message d'instruction d'alimentation.

17. Procédé de gestion comprenant :
une étape A consistant à transmettre un message d'instruction d'alimentation par un serveur de gestion (300) par l'intermédiaire d'une ligne de communication, dans lequel le message d'instruction d'alimentation comporte un message de commande d'alimentation demandant une commande pour une source d'alimentation répartie (130) installée dans une installation (100), ou un message de commande de flux d'alimentation vers l'avant demandant une commande pour une quantité de flux d'alimentation vers l'avant depuis un réseau électrique vers l'installation (100), ou un message de commande de flux d'alimentation inverse demandant une commande pour une quantité de flux d'alimentation inverse depuis l'installation (100) vers le réseau électrique ; et
une étape B consistant à calculer et à gérer, par le serveur de gestion (300), des informations de fiabilité liées à la fiabilité de la réponse de l'installation (100) au message d'instruction d'alimentation, dans lequel les informations de fiabilité sont calculées et gérées à partir d'au moins un élément parmi un type d'un fournisseur qui fournit la ligne de communication, un type d'un système de gestion d'alimentation appartenant à l'installation (100), et un type d'un équipement cible installé dans l'installation (100) et commandé en réponse au message de commande de flux d'alimentation vers l'avant,
dans lequel l'étape A comporte une étape consistant à transmettre le message d'instruction d'alimentation à l'installation (100), sur la base des informations de fiabilité.

18. Procédé de gestion comprenant :
une étape A consistant à transmettre, par un serveur de gestion (300), un message d'instruction d'alimentation comportant un message de commande d'alimentation demandant une commande pour une source d'alimentation répartie (130) installée dans une installation (100), ou un message de commande de flux d'alimentation vers l'avant demandant une commande pour une quantité de flux d'alimentation vers l'avant depuis un réseau électrique vers l'installation (100), ou un message de commande de flux d'alimentation inverse demandant une commande pour une quantité de flux d'alimentation inverse depuis l'installation (100) vers le réseau électrique, par l'intermédiaire d'une ligne de communication ; et
une étape B consistant à estimer, par le serveur de gestion (300), une quantité de commande attendue qui est une quantité de flux d'alimentation vers l'avant ou une quantité de flux d'alimentation inverse qui diminue en réponse à un message de commande de flux d'alimentation vers l'avant, sur la base d'informations de planification indiquant une planification quant à la possibilité de répondre au message d'instruction d'alimentation.
